# EUROPÄISCHE PATENTSCHRIFT

(11) **EP 2 897 778 B1**
(45) Veröffentlichungstag und Bekanntmachung des Hinweises auf die Patenterteilung: **28.12.2016**
(21) Anmeldenummer: 13776411.4
(22) Anmeldetag: 10.09.2013
(51) Int. Cl.: B29C 45/14, B29C 33/00, B29C 39/10

(54) **VERFAHREN ZUR HERSTELLUNG EINES KABELSATZES SOWIE KABELSATZ**
METHOD FOR PRODUCING A CABLE HARNESS AND CABLE HARNESS
PROCÉDÉ D'OBTENTION D'UN FAISCEAU DE CÂBLES ET FAISCEAU DE CÂBLES

(30) Priorität: 18.09.2012 DE 102012018382
(43) Veröffentlichungstag der Anmeldung: 29.07.2015
(73) Patentinhaber: LEONI Bordnetz-Systeme GmbH, 97318 Kizingen (DE)
(72) Erfinder: GRÖTSCH, Matthias, 97318 Kitzingen (DE); HORNUNG, Adolf, 96169 Geiselwind (DE)
(74) Vertreter: FDST Patentanwälte
(86) Internationale Anmeldenummer: PCT/EP2013/002706
(87) Internationale Veröffentlichungsnummer: WO 2014/044362

(56) Entgegenhaltungen:
- WO-A1-00/13940
- CN-Y- 2 480 931
- US-A- 4 405 083

## Beschreibung

Die Erfindung betrifft ein Verfahren zur Herstellung eines Kabelsatzes mit einem bereichsweise von einer Umhüllung aus einer Gussmasse umgebenen elektrischen Leitungsbündel, bei dem das Leitungsbündel in eine Werkzeugform eingelegt und das Leitungsbündel durch eine Durchtrittsöffnung durchgeführt wird und anschließend innerhalb der Werkzeugform von der Gussmasse umgeben wird. Die Erfindung betrifft weiterhin einen solchen Kabelsatz mit einem bereichsweise von einer Umhüllung aus einer Gussmasse umgebenen elektrischen Leitungsbündel

Ein derartiges Verfahren sowie ein derartiger Kabelsatz ist beispielsweise aus der DE 19 13 322 C zu entnehmen.

Zur Ausbildung von gegossenen oder geschäumten Umhüllungen bei Kabelsätzen wird ein Leitungsbündel in eine Werkzeugform eingelegt und anschließend wird in diese eine Guß- oder Schaum-masse eingebracht, so dass sich die Umhüllung ausbildet.

Aus der DE 37 10 642 A1 ist ein formstabiler Kabelsatz zu entnehmen, der ein von einem Schaummantel umgebenes Leitungsbündel mit definierten, formstabilen Abzweigungen aufweist.

Die Guß- oder Schaummasse ist üblicherweise im Verarbeitungszustand sehr dünnflüssig, so dass besondere Maßnahmen zur stirnseitigen Abdichtung der Werkzeugform im Bereich einer Durchtrittsöffnung erforderlich sind, an der das Leitungsbündel austritt. Aus der DE 10 2004 030 026 A1 ist beispielsweise eine Schieberanordnung zur Abdichtung der Durchtrittsöffnung zu entnehmen. Aus der DE 19 13 322 C ist die Verwendung von elastischen Einsätzen zur Abdichtung des Leitungsbündels zu entnehmen. Das Leitungsbündel ist dabei von einer Bandierung umgeben.

Aus der US 4,405,083 ist eine Werkzeugform zum Erzeugen einer Abdichtstruktur mit einzelnen Lamellen an einem Endstück eines Telekommunikationskabels zu entnehmen.

Aus der CN 2480931 ist ein Alarmkabel mit einem mehrlagigen metallischen Schirmmantel zu entnehmen. Schließlich ist aus der WO 00/13940 ein mehrdimensional geformter Kabelbaum für opto-elektronische Baugruppen zu entnehmen, welcher aus einem metallischen Röhrchen geringer Biegesteifigkeit mit innenliegenden Datenübertragungselementen besteht.

Ausgehend hiervon liegt der Erfindung die Aufgabe zugrunde, ein Verfahren zur Herstellung eines Kabelsatzes sowie einen Kabelsatz anzugeben, bei denen die Umhüllung im Bereich des Austritts des Leitungsbündels eine definierte Begrenzung aufweist.

Die Aufgabe bezüglich des Verfahrens wird erfindungsgemäß gelöst mit den Merkmalen des Anspruchs 1. Die Aufgabe bezüglich des Kabelsatzes wird erfindungsgemäß gelöst durch die Merkmale des Anspruchs 10. Die nachfolgend im Hinblick auf das Verfahren beziehungsweise auf den Kabelsatz angeführten Vorteile und bevorzugten Ausgestaltungen sind sinngemäß jeweils wechselseitig auch auf den Kabelsatz beziehungsweise das Verfahren zu übertragen.

Danach ist vorgesehen, dass ein Einlegeteil zumindest mit einem Endbereich in die Werkzeugform eingelegt wird, um das Einlegeteil im Endbereich in die Gußmasse einzubetten. Das Einlegeteil wird gemeinsam mit dem zumindest eine elektrische Leitung aufweisenden Leitungsbündel durch eine Durchtrittsöffnung aus einem Gießraum der Werkzeugform herausgeführt. Für eine zuverlässige Abdichtung an der Austrittsstelle weist die Werkzeugform ein Druckelement auf, welches in radialer Richtung gegen das Einlegeteil gepresst wird. Um die radiale Druckkraft hierbei zuverlässig aufnehmen zu können ist ergänzend ein Stützelement angeordnet, welches zwischen dem Leitungsbündel und dem Einlegeteil eingelegt wird. Das Stützelement definiert daher quasi ein Widerlager für das Druckelement, so dass das Einlegeteil zwischen dem Druckelement und Stützelement eingeklemmt ist. Dadurch wird eine definierte Trennlinie für die üblicherweise sehr dünnflüssige Gussmasse beim Gieß- oder Spritzgießvorgang geschaffen. Insgesamt ist dadurch eine klare Begrenzung im Übergangsbereich zwischen der Umhüllung zu dem aus der Umhüllung austretenden Einlegeteil erzielt. Das Stützelement wird daher gemeinsam mit dem Einlegeteil zumindest teilweise in der Gussmasse eingebettet, bildet daher ein Verbrauchsteil, welches im Kabelsatz verbleibt.

Soweit vorliegend von "Gussmasse" gesprochen wird, so ist hierunter jegliche aushärtbare Masse zu verstehen, welche in flüssiger oder zähflüssiger Form in die Werkzeugform eingebracht wird. Insbesondere wird als Gieß- oder Gussmasse vorzugsweise ein an sich bekanntes Polyurethan-Schaumsystem verwendet, welches typischerweise eine sehr niedrige Viskosität beispielsweise im Bereich von 400nPa * s aufweist.

Unter Druckelement wird allgemein ein Element verstanden, welches zur Übertragung einer externen Druckkraft geeignet ist.

Der entsprechend diesem Verfahren hergestellte Kabelsatz mit einem bereichsweise von einer Umhüllung aus der Gussmasse umgebenen elektrischen Leitungsbündel zeichnet sich daher auch dadurch aus, dass das Einlegeteil gemeinsam mit dem Leitungsbündel stirnendseitig aus der Gussmasse austritt und außerhalb der Gussmasse eine freie Außenseite des Kabelsatzes und damit für das Leitungsbündel bildet. In einem Endbereich dieser freien Außenseite, an den sich also die Umhüllung anschließt, ist das Stützelement zwischen dem Einlegeteil und dem Leitungsbündel angeordnet. Das Stützelement ist dabei vorzugsweise lediglich in diesem Übergangsbereich angeordnet und erstreckt sich nicht über die gesamte Länge des Einlegeteils. Bei dem Stützelement handelt es sich dabei vorzugsweise um ein formstabiles, eigensteifes Element, insbesondere eine Hülse, welche das Leitungsbündel ringartig umgibt. Da die Gusmasse das Leitungsbündel umgibt, gleichzeitig das Einlegeteil radial außen angeordnet ist, ist das Einlegeteil von dem Leitungsbündel beabstandet, so dass ein freier radialer Raum, insbesondere Ringraum zwischen dem Leitungsbündel und dem Einlegeteil ausgebildet ist.

Unter freier Außenseite wird hierbei allgemein verstanden, dass das Einlegeteil das Leitungsbündel radial nach außen begrenzt, vorzugsweise ohne dass eine weitere Umhüllung oder Ummantelung um das Einlegeteil angeordnet ist.

Das Einlegeteil ist dabei bevorzugt als ein Hitzeschutzelement für das Leitungsbündel ausgebildet.

Der Kabelsatz dient insgesamt vorzugsweise zur Anwendung in einem Kraftfahrzeug, insbesondere im Motorraum und ist zumindest in der Nähe von im Betrieb heißen Bauteilen angeordnet. Durch das Einlegeteil, welches also mit einem Endbereich in der Umhüllung eingebettet ist, ansonsten aber außerhalb der Umhüllung ein Schutzelement für das Leitungsbündel definiert, ist daher das Leitungsbündel gegen die Hitze geschützt. Eine vollständige Einbettung des Leitungsbündels in einem hochtemperaturbeständigen Kunststoff ist daher nicht erforderlich. Dadurch lassen sich Materialkosten einsparen sowie auch der Raumbedarf verringern. Für eine effiziente Hitzeschutzfunktion ist das Einlegeteil aus einem temperaturstabilen Material, beispielsweise aus einem temperaturstabilen Kunststoff oder auch insbesondere aus Metall ausgebildet. Zweckdienlicherweise weist es eine metalllisierte oder auch metalllische und insbesondere eine reflektierenden Oberfläche auf.

Beim Verfahren wird zur Erzielung einer sicheren Abdichtung auf das Druckelement eine externe Druckkraft ausgeübt, welche auf das Stützelement übertragen wird. Das Druckelement ist hierzu in bevorzugter Ausgestaltung als ein separates, formstabiles Bauteil an der Werkzeugform im Bereich der Durchtrittsöffnung ausgebildet, durch die das Leitungsbündel sowie das Einlegeteil gemeinsam austreten. Das Bauteil selbst kann auch zumindest teilweise die Durchtrittsöffnung definieren. Bevorzugt ist das Bauteil dabei in radialer Richtung relativ zu einer Wandung der Werkzeugform verschieblich angeordnet. In Kabellängsrichtung wird der Gießraum über Wandungsbereiche der Werkzeugform begrenzt. Über das Druckelement wird daher lediglich die Durchtrittsöffnung stirnseitig verschlossen. Aufgrund der separaten Ausgestaltung kann das Druckelement geeignet für die Übertragung von hohen Druckkräften ausgebildet sein. Das Druckelement selbst ist dabei entweder an oder auch in einer Ausnehmung der Wandung der Werkzeugform gelagert.

In besonders vorteilhafter Ausgestaltung erstreckt sich das Einlegeteil in Kabellängsrichtung zwischen zwei Endbereichen, wobei in jedem Endbereich jeweils ein Druckelement gegen das Einlegeteil gepresst wird. Lediglich die Endbereiche werden dabei jeweils in einer jeweiligen Umhüllung eingebettet, so dass sich vorzugsweise beidendseitig an das Einlegeteil jeweils eine Umhüllung aus der Gussmasse anschließt. Zwischen diesen beiden Endbereichen ist das Einlegeteil nicht von der Gussmasse umgeben ist.

Das Einlegeteil wird dabei zweckdienlicherweise in eine gemeinsame, die beiden Druckelemente aufweisende Werkzeugform eingelegt, welche zwei in Kabellängsrichtung voneinander beabstandete Gießräume aufweist, zwischen denen sich das Einlegeteil erstreckt. Das Einlegeteil ist daher beidendseitig in den jeweiligen Umhüllungen eingebettet und gehalten. Das Einlegeteil erstreckt sich über die gesamte freie Länge zwischen den Umhüllungen und schützt in diesem nicht von der Gussmasse ummantelten Bereich das Leitungsbündel.

Gemäß einer ersten Ausführungsvariante umgibt das Einlegeteil die Leitung insgesamt schlauchförmig, so dass diese allseitig geschützt ist. Das Einlegeteil selbst ist dabei beispielsweise als Schlauch ausgebildet, durch den das Leitungsbündel hindurch geführt ist. Alternativ besteht auch die Möglichkeit, das Einlegeteil nach Art eines Geflechts oder Wicklung oder auch aus einer Kombination eines Schlauchs und einer Wicklung auszubilden. Zweckdienlicherweise ist das Einlegeteil dabei durch eine Folie gebildet oder weist zumindest eine Folie auf. In besonders bevorzugter Ausgestaltung ist das Einlegeteil als ein Hybridbauteil aus mehreren Lagen ausgebildet und weist vorzugsweise einen inneren Schlauch, beispielsweise einen Gewebeschlauch auf, welcher von einer hitzebeständigen Folie, insbesondere Metallfolie umgeben, insbesondere umwickelt ist.

Alternativ zu dieser schlauchartigen Ausbildung des Einlegeteils erstreckt sich dieses nicht über den kompletten Umfang des Leitungsbündels sondern nur über einen begrenzten Winkelbereich. Das Druckelement erstreckt sich vorzugsweise identisch über den gleichen Winkelbereich wie das Einlegeteil. Um eine zuverlässige Abdichtung zu erzielen ist hierbei vorzugsweise vorgesehen, dass das Einlegeteil in einer Trennebene der Werkzeugform geklemmt wird. Hierzu ist beispielsweise vorgesehen, dass das Einlegeteil im Bereich der Trennebene radial abstehende Randbereiche aufweist, die eingeklemmt werden.
Allgemein ist in zweckdienlicher Ausbildung das Druckelement mit einer Dichtlippe versehen. Die Dichtlippe ist vorzugsweise als ein entlang einer Dichtlinie umfangseitig verlaufendes rippenartiges Element ausgebildet. Hierdurch wird die Flächenpresskraft für eine gute Abdichtung erhöht. Zweckdienlicherweise ist daher die Dichtlippe als ein im Wesentlichen steifes Element ausgebildet. Alternativ hierzu besteht auch die Möglichkeit, dass die Dichtlippe als ein elastisches Element, beispielsweise als Dichtgummi ausgebildet ist.

Zweckdienlicherweise ist dem Druckelement ein gegenüberliegendes Widerlager zugeordnet, wobei das Einlegeteil zwischen Druckelement und Widerlager eingeklemmt ist. Das Druckelement und das Widerlager ergänzen sich daher vorzugsweise zu einem das Leitungsbündel und das Einlegeteil ringförmig umgebenden Klemm- oder Druckring. Ihre Querschnittskontur ist der des Einlegeteils angepasst. Das Widerlager ist ebenso wie das Druckelement dabei als ein eigenständiges, vorzugsweise formstabiles Bauteil ausgebildet und ist beispielsweise ebenso wie das Druckelement mit einer Dichtlippe versehen.

Alternativ zu dieser separaten Ausgestaltung ist das Widerlager ein Teilbereich einer Wandung der Werkzeugform selbst. Das Druckelement sowie das Widerlager sind vorzugsweise jeweils halbschalenartig ausgebildet.

Weiterhin ist vorzugsweise vorgesehen, dass das Druckelement Randbereiche aufweist, mit denen es am Widerlager aufliegt. Das Widerlager selbst ist bevorzugt etwa U-förmig ausgebildet und das Einlegeteil liegt passgenau ein. In die nach oben offene Öffnung der U-förmigen Ausnehmung greift das Druckelement ein, und weist bevorzugt einen keilförmig auslaufenden Endabschnitt auf, der zwischen dem Widerlager und dem Einlegeteil eingeklemmt wird.

Ausführungsbeispiele der Erfindung werden nachfolgend anhand der Figuren näher erläutert. Diese zeigen jeweils in vereinfachten Darstellungen:
- Fig 1: einen ausschnittsweisen Längsschnitt durch eine Werkzeugform mit darin eingelegtem Leitungsbündel sowie Einlegeteil,
- Fig 2: eine Querschnittdarstellung durch die Werkzeugform gemäß Figur 1 entlang der Linie II,II,
- Fig. 3: ein ausschnittsweiser Längsschnitt durch einen Kabelsatz,
- Fig 4: eine Querschnittdarstellung durch den Kabelsatz gemäß der Schnittlinie IV-IV in Figur 3,
- Fig 5: eine Querschnittsdarstellung des Kabelsatzes gemäß der Schnittlinie V-V in Figur 3,
- Fig 6: eine Querschnittsdarstellung des Kabelsatzes entlang der Schnittlinie VI-VI in Figur 3, sowie
- Fig. 7: eine zur Figur 2 vergleichbare Querschnittsdarstellung der Werkzeugform mit einer alternativen Ausgestaltung des Einlegeteils.

In den Figuren sind gleichwirkende Teile mit den gleichen Bezugszeichen versehen.

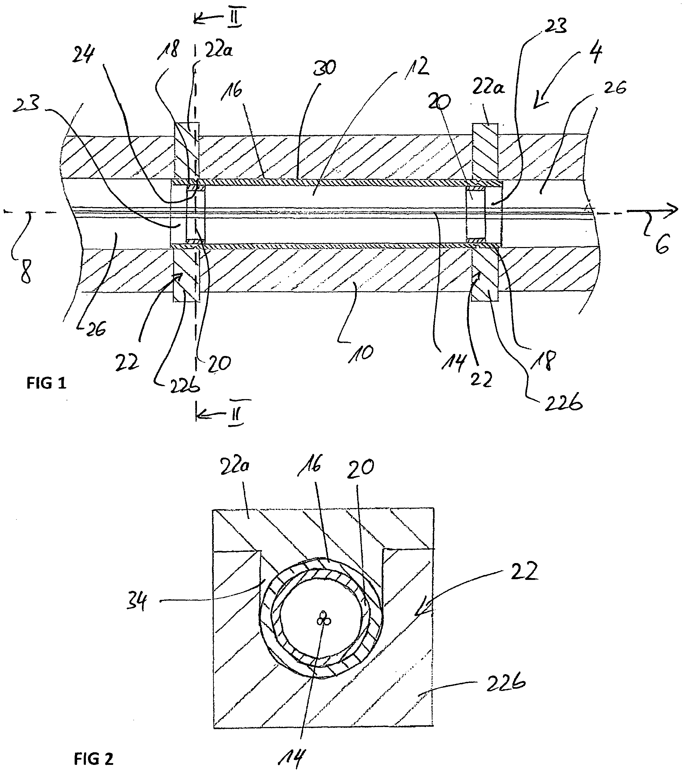

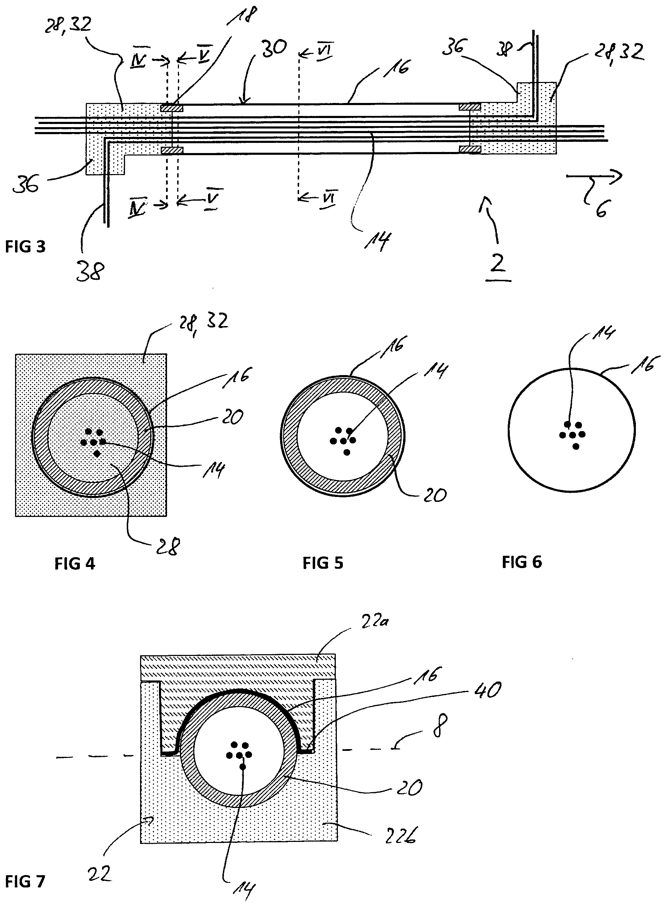

Zur Herstellung des in Figur 3 dargestellten Kabelsatzes 2 wird die in Figur 1 dargestellte Werkzeugform 4 herangezogen. Die Werkzeugform 4 sowie der Kabelsatz 2 erstrecken sich jeweils in Kabellängsrichtung 6. Die Werkzeugform 4 weist dabei üblicherweise zwei nach Art von Halbschalen ausgebildete Werkzeugteile auf, die entlang einer sich in Kabellängsrichtung 6 erstreckenden Werkzeugtrennebene 8 geteilt sind. Eine Wandung 10 der Werkzeugform begrenzt einen freien Innenraum 12, in den ein Leitungsbündel 14 sowie ein als Hitzeschutzelement ausgebildetes Einlegeteil 16 eingelegt werden. Das Leitungsbündel 14 ist üblicherweise ergänzend noch mit einer hier nicht näher dargestellten Bandierung umwickelt.

Das Einlegeteil 16 erstreckt sich dabei in Kabellängsrichtung 6 zwischen zwei Endbereichen 18. In den Endbereichen 18 ist jeweils ein als Stützring 20 ausgebildetes Stützelement angeordnet, welches einerseits das Leitungsbündel 14 umgibt, und über das anderseits der jeweilige Endbereich 18b des Einlegeteils 16 übergestülpt ist. Das Einlegeteil 16 steht dabei in Kabellängsrichtung 6 jeweils einen Teilbereich über den jeweiligen Stützring 20 über.

Zwischen dem Leitungsbündel 14 und dem Stützring 20 ist ein Freiraum gebildet, so dass das Leitungsbündel 14 lose durch das Einlegeteil hindurchgeführt ist. Der Abstand zwischen dem Leitungsbündel 14 und dem Einlegeteil 16 entspricht dabei in etwa der Manteldicke der das Leitungsbündel 14 umgebenden Gussmasse 28.

Die Werkzeugform 4 weist weiterhin zwei in Kabellängsrichtung 6 voneinander beabstandete Klemmringe 22 auf, die gebildet sind aus einem Druckelement 22a und einem Widerlager 22b hierzu. Die Klemmringe 22 definieren jeweils eine Durchtrittsöffnung 23, durch die Leitungsbündel 14 hindurchgeführt wird. Das Druckelement 22a sowie das Widerlager 22b sind dabei innerhalb des Wandungsbereichs 10 der Werkzeugform 4 in radialer Richtung beweglich gelagert, zumindest das Druckelement 22a, so dass eine auf das Druckelement 22a ausgeübte radiale Druckkraft über das Druckelement 22a auf das Einlegeteil 16 übertragen wird.

Wie aus Figur 1 zu erkennen ist, ist der Stützring 20 jeweils im Bereich des jeweiligen Druckelements 22a angeordnet, so dass das Einlegeteil 16 jeweils zwischen dem Druckelement 22a beziehungsweise dem Widerlager 22b und dem Stützring 20 eingeklemmt ist.

Zur Verbesserung der Dichtwirkung und Erhöhung der aufgebrachten Flächenanpresskraft weist sowohl das Druckelement 22a als auch das Widerlager 22b eine als Klemm- oder Dichtrippe 24 ausgeformte Dichtlippe auf, welche insgesamt vollumfänglich um das Einlegeteil 16 umläuft.

Durch die beiden Klemmringe 22 ist die Werkzeugform an den Durchtrittsöffnungen 23 in mehrere in der Ausführungsvariante der Figur 1 in drei Teilbereiche unterteilt, nämlich in zwei Außenbereiche und in einen Mittenbereich. Im Mittenbereich verläuft das Einlegeteil 16, welches sich in die Außenbereiche nur teilweise mit den Endbereichen 18 erstreckt. Diese zwei Außenbereiche des freien Innenraums 12 definieren dabei jeweils einen Gießraum 26, welcher mit einer Gussmasse 28 (vgl. Figur 3) ausgefüllt wird.

Ergänzend zu der in Figur 1 dargestellten Variante sind die einzelnen Leitungen des Leitungsbündels 14 bevorzugt noch durch einen hier nicht näher dargestellten Separator geführt, so dass der Mittenbereich zu den beiden Gießräumen 26 auch im zentralen, von dem Einlegeteil 16 umgebenen Bereich abgedichtet ist.

Zur Herstellung des Kabelsatzes 2 wird das Leitungsbündel 14 gemeinsam mit den Stützringen 20 und dem Einlegeteil 16 in die Werkzeugform 4 eingelegt. Handelt es sich - wie beispielsweise bei der Ausführungsvariante gemäß den Figuren 2 bis 6 - um ein schlauchförmiges Einlegeteil 16 sowie um ein ringförmiges Stützelement 20, so wird das Leitungsbündel 14 durch den jeweiligen Stützring 16 hindurchgeführt und anschließend wird das schlauchförmige Einlegeteil 16 über das Leitungsbündel 14 und über die Stützringe 20 geschoben. Die Stützringe 20 werden im Bereich der Klemmringe 22 in der Werkzeugform 4 positioniert. Anschließend werden die beiden Werkzeughälften geschlossen. Über das insbesondere nach Art einer Kabeldruckleiste ausgebildetes Druckelement 22a wird dann eine von extern aufgebrachte Anpresskraft ausgeübt, so dass das Einlegeteil 16 zwischen Druckelement 22a und dem Stützring 20 eingeklemmt wird. Anschließend wird die Gussmasse 28 in die Gießräume 26 durch hier nicht näher dargestellte Eingussöffnungen eingebracht. Bei der Gussmasse 28 handelt es sich insbesondere um ein Polyurethan-Schäumsystem, das typischerweise eine sehr hohe Ausgangsviskosität aufweist.

Der gesamte Hohlraum im Gießraum 26 wird dann durch das Expandieren der Gussmasse 28 ausgefüllt. Hierbei wird der in den Gießraum 26 hineinreichende Teilbereich der Endbereiche 18 in der Gussmasse 28 eingebettet. Aufgrund der hohen Viskosität legt sich die Gussmasse 28 auch umfangsseitig um das Einlegeteil 16 herum. Die Gussmasse 28 dringt daher zwischen der Innenseite des Druckelements 22a beziehungsweise des Widerlagers 22b und dem Einlegeteil 16 ein. Die Ausbreitung in Kabellängsrichtung 6 ist durch die Dichtrippe 24 begrenzt. Durch diese Maßnahme ist daher zuverlässig gewährleistet, dass eine definierte klare Trennstelle ausgebildet ist und die Gussmasse 28 eben nicht in den Mittenbereich eindringt. Die Außenseite des Einlegeteils 16 in diesem mittleren Bereich bildet daher eine freie Außenseite 30, die nicht von der Gussmasse 28 umgeben ist. Angrenzend an dieser freien Außenseite 30 schließt sich daher eine von der Gussmasse 28 gebildete Umhüllung 32 an. Diese weist im Ausführungsbeispiel eine rechteckförmige Querschnittskontur auf.

Um eine zuverlässige Abdichtung im Grenzbereich von der Umhüllung 32 zur freien Außenseite 30 zu erzielen weist im Ausführungsbeispiel der Figur 2 das Widerlager 22b eine etwa u-förmige Öffnung auf, in der das Einlegeteil 16 zusammen mit dem Stützring 20 und Leitungsbündel 40 aufgenommen wird. Das Druckelement 22a ist nach Art einer T-förmigen Druckleiste auf das Widerlager 22b aufgesetzt. Entsprechend der Kontur des Stützrings 20 ist sowohl das Druckelement 22a als auch das Widerlager 22b an der Innenseite jeweils konkav gekrümmt ausgebildet. In Verbindung mit dem u-förmigen Aufnahmeraum ergibt sich dadurch auf Seiten des Druckelements 22a zwei keilförmig auslaufende Endabschnitte 34.

Alternativ hierzu sind Druckelement 22a und Widerlager 22b durch zwei gleichartige Halbschalen-Elemente gebildet. Die Trennebene zwischen Druckelement 22a, 22b entspricht vorzugsweise der Werkzeugtrennebene 8.

Wie anhand des in der Figur 3 dargestellten Kabelsatzes noch zu erkennen ist, sind in den beiden gegenüberliegenden Umhüllungen 32 Abzweigungen 36 ausgebildet, so dass ein Teilbündel 38 des Leitungsbündels 14 von der Kabellängsrichtung 6 abgezweigt werden. Das Teilbündel 38 ist dabei ebenfalls von der Umhüllung 32 umgeben, so dass die Abzweigung 36 insgesamt formstabil gehalten ist und der Abgangswinkel des Teilbündels 38 fest definiert ist. Weiterhin ist zu erkennen, dass das Leitungsbündel 14 aus den Umhüllungen 32 jeweils wieder austritt. Die Umhüllungen 32 sind daher lediglich im Bereich der Abzweigung 36 ausgebildet. Das Leitungsbündel 14 sowie die Teilbündel 18 werden anschließend noch weiter zu elektrischen Komponenten geführt, an denen sie angeschlossen werden. Zum Einführen in ein jeweiliges Gehäuse der elektrischen Komponente sind dabei beispielsweise am jeweiligen Leitungsbündel 14 bzw. am Teilbündel 18 noch Abdichttüllen ausgebildet, vorzugsweiße ebenfalls als Gussteil.

Anhand der Figuren 4 bis 6 lassen sich nochmals die einzelnen Querschnittsgeometrien in den unterschiedlichen Bereichen, nämlich im Bereich des von der Umhüllung 32 umgebenen Stützrings 20 (Figur 4), im freien Endbereich 18 direkt angrenzend an die Umhüllung 32 (Figur 5) sowie im Mittenbereich zwischen den beiden Umhüllungen 32 (Figur 6) zu erkennen. Aufgrund des speziellen Herstellverfahrens ist im Endbereich 18 der Stützring 20 angeordnet, der in der Umhüllung 32 eingebettet ist und sich aus dieser heraus erstreckt.

Bei der in den Figuren 3 bis 6 dargestellten Ausführungsvariante ist das Einlegeteil 16 schlauchartig ausgebildet und umschließt das Leitungsbündel 14 daher vollumfänglich. Die freie Außenseite 30, die das Leitungsbündel 14 insbesondere vor Hitzeeinwirkung schützt, erstreckt sich dabei vorzugsweise über mehrere zehn cm. Der Kabelsatz 2 ist im endmontierten Zustand vorzugsweise in einem Kraftfahrzeug und dort insbesondere in einem hitzebeanspruchten Teilbereich, beispielsweise im Motorraum und / oder im Bereich des Abgastrakts angeordnet.

Das Einlegeteil 16 ist dabei insbesondere als ein flexibler Schlauch ausgebildet, bevorzugt nach Art eines Hybridschlauches mit einem inneren Geflecht- oder Gewebeschlauch, welcher von einer metallischen Bandierung umwickelt ist. Bei dieser Ausgestaltung ist der Kabelsatz 2 im Bereich der freien Außenseite 30 sehr biegeelastisch ausgebildet und kann problemlos auch gebogen verlegt werden.

Alternativ zu der schlauchartigen Ausbildung des Einlegeteils 16 erstreckt sich dieses gemäß der in Figur 7 dargestellten Ausführungsvariante nur über einen Teilbereich und ist beispielsweise nach Art eines massiven, eigensteifen, bei spielsweise metallischen Profils ausgebildet, wie dies in Figur 7 dargestellt ist. Zweckdienlicherweise ist auch bei einem derartigen, sich nur über einen begrenzten Winkelbereich erstreckendem Einlegeteil 16 ein ringförmiges Stützelement 20 verwendet, um die Klemmkräfte gut aufnehmen zu können. Alternativ hierzu ist das Stützelement 20 an die Kontur des Einlegeteils 16 angepasst. Wie der Figur 7 zu entnehmen ist, weist im Ausführungsbeispiel das Einlegeteil 16 nach außen abstehende Randbereiche 40 auf, welche zwischen dem Druckelement 22a und dem Widerlager 22b geklemmt werden. Diese Randbereiche 40 liegen dabei bevorzugt innerhalb der Werkzeugtrennebene 8.

### Bezugszeichenliste

- 2: Kabelsatz
- 4: Werkzeugform
- 6: Kabellängsrichtung
- 8: Werkzeugtrennebene
- 10: Wandung
- 12: Innenraum
- 14: Leitungsbündel
- 15: Bandierung
- 16: Einlegeteil
- 18: Endbereich
- 20: Stützring
- 22: Klemmring
- 22a: Druckelement
- 22b: Widerlager
- 23: Durchtrittsöffnung
- 24: Dichtrippe
- 26: Gießraum
- 28: Gussmasse
- 30: freier Außenseite
- 32: Umhüllung
- 34: Endabschnitt
- 36: Abzweigung
- 38: Teilbündel
- 40: Randbereich

## Patentansprüche

1. Verfahren zur Herstellung eines Kabelsatzes (2) mit einem bereichsweise von einer Umhüllung (32) aus einer Gussmasse (28) umgebenen elektrischen Leitungsbündel (14), das in eine Werkzeugform (4) eingelegt, durch eine Durchtrittsöffnung (23) hindurchgeführt und anschließend innerhalb der Werkzeugform (4) von der Gussmasse (28) umgeben wird,
**dadurch gekennzeichnet,**
**dass** ein Einlegeteil (16) an der Durchtrittsöffnung (23) in Kabellängsrichtung (6) abgedichtet wird, indem ein Druckelement (22a) in radialer Richtung gegen das Einlegeteil (16) gepresst wird und ein Stützelement (20) zur Aufnahme der radialen Presskraft zwischen dem Leitungsbündel (14) und dem Einlegeteil (16) eingelegt wird, wobei das Einlegeteil (16) von dem Leitungsbündel (14) beabstandet ist, so dass ein freier radialer Raum ausgebildet ist.

2. Verfahren nach Anspruch 1,
**dadurch gekennzeichnet,**
**dass** das Druckelement (22a) als ein separates Bauteil ausgebildet ist, das in radialer Richtung relativ zu einer Wandung (10) der Werkzeugform (4) verschieblich ist.

3. Verfahren nach einem der vorhergehenden Ansprüche,
**dadurch gekennzeichnet,**
**dass** das Einlegeteil (16) sich in Kabellängsrichtung (6) zwischen zwei Endbereichen (18) erstreckt und in den Endbereichen (18) jeweils ein Druckelement (22a) gegen das Einlegeteil (16) gepresst wird.

4. Verfahren nach einem der vorhergehenden Ansprüche,
**dadurch gekennzeichnet,**
**dass** die Werkzeugform (4) an in Kabellängsrichtung (6) gegenüberliegenden Endbereichen (18) des Einlegeteils (16) zwei voneinander beabstandete Gießräume (26) aufweist, so dass das Einlegeteil (16) nur an seinen Endbereichen (18) in der Gussmasse (28) eingebettet wird.

5. Verfahren nach einem der vorhergehenden Ansprüche, wobei das Druckelement (22a) eine Dichtlippe (24) aufweist.

6. Verfahren nach einem der vorhergehenden Ansprüche, wobei das Druckelement (22a) das Einlegeteil (16) gegen ein gegenüberliegendes Widerlager (22b) presst, so dass das Druckelement (22a) und das Widerlager (22b) sich zu einem das Leitungsbündel (14) und das Einlegeteil (16) ringförmig umgebenden Klemmring (22) ergänzen.

7. Kabelsatz (2) mit einem bereichsweise von einer Umhüllung (32) aus einer Gussmasse (28) umgebenen elektrischen Leitungsbündel (14),
wobei in die Gussmasse (28) ein Einlegeteil (16) eingebettet ist, das aus der Gussmasse (28) austritt, wobei in einem nicht von der Umhüllung (32) umgebenen Endbereich (18) des Einlegeteils (16) ein Stützelement (20) zwischen dem Einlegeteil (16) und dem Leitungsbündel (14) angeordnet ist, **dadurch gekennzeichnet, dass** das Einlegeteil (16) von dem Leitungsbündel (14) beabstandet ist, so dass ein freier radialer Raum ausgebildet ist.

8. Kabelsatz (2) nach Anspruch7,
**dadurch gekennzeichnet,**
**dass** das Einlegeteil (16) als Hitzeschutzelement für das Leitungsbündel (14) ausgebildet ist.

9. Kabelsatz (2) nach einem der Ansprüche 7 oder 8,
**dadurch gekennzeichnet,**
**dass** zwei voneinander beabstandete Umhüllungen (32) ausgebildet sind und das Einlegeteil (16) sich zwischen den beiden Umhüllungen (32) erstreckt.

10. Kabelsatz (2) nach einem der Ansprüche 7 bis 9,
**dadurch gekennzeichnet,**
**dass** das Einlegeteil (16) das Leitungsbündel (14) schlauchartig umgibt.

11. Kabelsatz (2) nach einem der Ansprüche 7 bis 10,
**dadurch gekennzeichnet,**
**dass** das Einlegeteil (16) das Leitungsbündel (14) nur bereichsweise umgibt.

12. Kabelsatz (2) nach einem der Ansprüche 7 bis 11,
**dadurch gekennzeichnet,**
**dass** das Einlegeteil (16) als Hitzeschutzelement ausgebildet ist und eine freie Außenseite aufweist, wobei das Einlegeteil (16) das Leitungsbündel (14) nur bereichsweise umgibt und als ein Profil oder eine Platte ausgebildet ist oder das Leitungsbündel (14) schlauchartig umgibt und eine um das Leitungsbündel (14) gewickelte Folie aufweist.

13. Kabelsatz (2) nach einem der Ansprüche 7 bis 12,
**dadurch gekennzeichnet,**
**dass** die Umhüllung (32) eine Abzweigung (36) aufweist, so dass ein Teilbündel (38) des Leitungsbündels (14) formstabil abgezweigt ist.

## Claims

1. Method for manufacturing a cable set (2) having an electric cable bundle (14), enclosed in certain areas by a coating (32) made of a casting compound (28), said bundle being inserted into a tool mould (4), fed through an opening (23) and finally enclosed by the casting compound (28) inside the tool mould (4),
**characterised in that**
an insert (16) is sealed in the opening (23) in the longitudinal direction of the cable (6) by a pressure element (22a) being pressed against the insert in a radial direction and a support element (20) for receiving the radial pressing force being inserted between the cable bundle (14) and the insert (16), wherein the insert (16) is spaced apart from the cable bundle (14) so that an unobstructed, radial space is formed.

2. Method according to claim 1,
**characterised in that**
the pressure element (22a) is formed as a separate component which is moveable in a radial direction relative to one wall (10) of the tool mould (4).

3. Method according to one of the preceding claims,
**characterised in that**
the insert (16) extends between two end regions (18) in the longitudinal direction of the cable (6) and, in the end regions (18), a respective pressure element (22a) is pressed against the insert (16).

4. Method according to one of the preceding claims,
**characterised in that**
the tool mould (4) has two mould spaces in the longitudinal direction of the cable (6) in opposite end regions (18) of the insert (16), so that the insert (16) is only embedded into the casting compound (28) at its end regions (18).

5. Method according to one of the preceding claims, wherein the pressure element (22a) has a sealing lip (24).

6. Method according to one of the preceding claims wherein the pressure element (22a) presses the insert (16) against an opposing counter bearing (22b), so that the pressure element (22a) and the counter bearing (22b) combine to form an annularly enclosing clamping ring (22) around the cable bundle (14) and the insert (16).

7. Cable set (2) having an electric cable bundle (14), enclosed in certain areas by a coating (32) made of a casting compound (28), wherein an insert (16) is embedded into the casting compound (28), said insert emerging from the casting compound (28), wherein, in an end region (18) of the insert (16) that is not enclosed by the coating (32), a support element (20) is arranged between the insert (16) and the cable bundle (14),
**characterised in that**
the insert (16) is spaced apart from the cable bundle (14), so that an unobstructed, radial space is formed.

8. Cable set (2) according to claim 7,
**characterised in that**
the insert (16) is formed as a heat protection element for the cable bundle (14).

9. Cable set (2) according to one of claims 7 or 8,
**characterised in that**
two coatings (32) that are spaced apart from one another are formed and the insert (16) extends between the two coatings (32).

10. Cable set (2) according to one of claims 7 to 9,
**characterised in that**
the insert (16) encloses the cable bundle (14) in a tube-like manner.

11. Cable set (2) according to one of claims 7 to 10,
**characterised in that**
the insert (16) only encloses the cable bundle (14) in certain areas.

12. Cable set (2) according to one of claims 7 to 11,
**characterised in that**
the insert (16) is formed as a heat protection element and has an unobstructed outer side, wherein the insert (16) only encloses the cable bundle (14) in certain areas and is formed as a profile or a panel, or encloses the cable bundle (14) in a tube-like manner and has a film that is wrapped around the cable bundle (14).

13. Cable set (2) according to one of claims 7 to 12,
**characterised in that**
the coating (32) has a branch (36), so that a bundle section (38) of the cable bundle (14) is branched off with structural stability.

## Revendications

1. Procédé de fabrication d'un jeu de câbles ou kit de câblage (2) comprenant un faisceau de câbles électrique (14), qui est entouré partiellement sur certaines zones par une enveloppe (32) en une masse de moulage (28), et qui est placé dans un outillage de moulage (4), traverse une ouverture de passage (23) et est ensuite enveloppé par la masse de moulage (28) à l'intérieur de l'outillage de moulage (4),
**caractérisé**
**en ce qu'**une pièce d'insert (16) est rendue étanche au niveau de l'ouverture de passage (23) dans la direction longitudinale (6) des câbles, par le pressage, dans la direction radiale, d'un élément de compression (22a) contre la pièce d'insert (16), et en ce qu'un élément de soutien (20) destiné à reprendre la force de pressage radiale est placé entre le faisceau de câbles (14) et la pièce d'insert (16), ladite pièce d'insert (16) étant espacée du faisceau de câbles (14), en réalisant ainsi un espace radial libre.

2. Procédé selon la revendication 1,
**caractérisé**
**en ce que** l'élément de compression (22a) est réalisé sous la forme d'une pièce séparée, qui peut coulisser dans la direction radiale par rapport à une paroi (10) de l'outillage de moulage (4).

3. Procédé selon l'une des revendications précédentes,
**caractérisé**
**en ce que** la pièce d'insert (16) s'étend, dans la direction longitudinale (6) des câbles, entre deux zones d'extrémité (18), et dans chacune des zones d'extrémité (18) un élément de compression (22a) respectif est pressé contre la pièce d'insert (16).

4. Procédé selon l'une des revendications précédentes,
**caractérisé**
**en ce que** l'outillage de moulage (4) présente au niveau de deux zones d'extrémité (18) de la pièce d'insert (16), qui sont mutuellement opposées dans la direction longitudinale (6) des câbles, deux cavités de moulage (26) situées à distance l'une de l'autre, de sorte que la pièce d'insert (16) ne va être encastrée dans la masse de moulage (28) qu'au niveau de ses zones d'extrémité (18).

5. Procédé selon l'une des revendications précédentes, d'après lequel l'élément de compression (22a) présente une lèvre d'étanchéité (24).

6. Procédé selon l'une des revendications précédentes, d'après lequel l'élément de compression (22a) presse la pièce d'insert (16) contre une butée antagoniste (22b) opposée, de sorte que l'élément de compression (22a) et la butée antagoniste (22b) se complètent en un anneau de serrage (22) entourant de manière annulaire le faisceau de câbles (14) et la pièce d'insert (16).

7. Jeu de câbles ou kit de câblage (2) comprenant un faisceau de câbles électrique (14) entouré partiellement sur certaines zones par une enveloppe (32) en une masse de moulage (28), une pièce d'insert (16) étant encastrée dans la masse de moulage (28) tout en sortant de la masse de moulage (28), et un élément de soutien (20) étant agencé entre le faisceau de câbles (14) et la pièce d'insert (16) dans une zone d'extrémité (18) de la pièce d'insert (16), qui n'est pas entourée par l'enveloppe (32),
**caractérisé**
**en ce que** la pièce d'insert (16) est espacée du faisceau de câbles (14), en réalisant ainsi un espace radial libre.

8. Jeu de câbles ou kit de câblage (2) selon la revendication 7,
**caractérisé**
**en ce que** la pièce d'insert (16) est réalisée en tant qu'élément de protection contre la chaleur pour le faisceau de câbles (14).

9. Jeu de câbles ou kit de câblage (2) selon l'une des revendications 7 ou 8,
**caractérisé**
**en ce que** sont formées deux enveloppes (32) espacées mutuellement l'une de l'autre, et la pièce d'insert (16) s'étend entre lesdites deux enveloppes (32).

10. Jeu de câbles ou kit de câblage (2) selon l'une des revendications 7 à 9,
**caractérisé**
**en ce que** la pièce d'insert (16) entoure le faisceau de câbles (14) à la manière d'un tuyau souple.

11. Jeu de câbles ou kit de câblage (2) selon l'une des revendications 7 à 10,
**caractérisé**
**en ce que** la pièce d'insert (16) n'entoure le faisceau de câbles (14) que partiellement sur certaines zones.

12. Jeu de câbles ou kit de câblage (2) selon l'une des revendications 7 à 11,
**caractérisé**
**en ce que** la pièce d'insert (16) est réalisée en tant qu'élément de protection contre la chaleur et présente un côté extérieur dégagé, la pièce d'insert (16) n'entourant que partiellement sur certaines zones le faisceau de câbles (14) et étant réalisée sous la forme d'un profilé ou d'une plaque, ou bien entoure le faisceau de câbles (14) à la manière d'un tuyau souple et comprend une feuille enroulée autour du faisceau de câbles (14).

13. Jeu de câbles ou kit de câblage (2) selon l'une des revendications 7 à 12,
**caractérisé**
**en ce que** l'enveloppe (32) présente une dérivation (36), de sorte qu'un faisceau partiel (38) du faisceau de câbles (14) est dérivé de manière stable en forme.
